# Europäisches Patentamt
# European Patent Office
# Office européen des brevets

(11) Numéro de publication : **0 077 224**
**B1**

(12)

# FASCICULE DE BREVET EUROPÉEN

(45) Date de publication du fascicule du brevet :
22.01.86

(21) Numéro de dépôt : 82401602.6

(22) Date de dépôt : 30.08.82

(51) Int. Cl.⁴ : **G 05 D 3/00**, B 25 J 3/04

(54) Système d'asservissement de position à retour d'effort avec retard de transmission et son application à un télémanipulateur.

(30) Priorité : 09.09.81 FR 8117103

(43) Date de publication de la demande :
20.04.83 Bulletin 83/16

(45) Mention de la délivrance du brevet :
22.01.86 Bulletin 86/04

(84) Etats contractants désignés :
BE CH DE GB IT LI

(56) Documents cités :
FR-A- 2 275 816
FR-A- 2 275 833

(73) Titulaire : **COMMISSARIAT A L'ENERGIE ATOMIQUE**
Etablissement de Caractère Scientifique Technique
et Industriel
31/33, rue de la Fédération
F-75015 Paris (FR)

(72) Inventeur : **Guittet, Jacques**
19, rue du Mont Ventoux Résidence du Mas Laurent
F-91940 Les Ulis (FR)
Inventeur : **Marchal, Paul**
13, résidence du Parc du Château de Courcelles
F-91190 Gif sur Yvette (FR)
Inventeur : **Micaelli, Alain**
42, Avenue Jeanne d'Arc
F-94110 Arcueil (FR)
Inventeur : **Vertrut, Jean**
3, rue Voisembert
F-92130 Issy-les-Moulineaux (FR)

(74) Mandataire : **Mongrédien, André et al**
c/o BREVATOME 25, rue de Ponthieu
F-75008 Paris (FR)

Jouve, 18, rue St-Denis, 75001 Paris, France

**Description**

La présente invention se rapporte à un système d'asservissement entre un actionneur maître et un actionneur esclave, chacun de ces actionneurs transmettant à un dispositif de commande de l'autre actionneur un signal de position et/ou de vitesse avec un certain retard de transmission. Bien qu'un tel système puisse s'appliquer à la commande manuelle de pilotage à distance d'un engin ou à toute commande nécessitant le dosage de l'effort exercé et son retour à la main de l'opérateur, elle est plus particulièrement adaptée à la commande de chacun des mouvements d'un télémanipulateur.

Les manipulateurs dits « maîtres-esclaves à retour d'effort » sont constitués généralement par un bras maître, par un bras esclave identique ou semblable au bras maître et par un système d'asservissement reliant les deux bras. Ce système d'asservissement a pour effet de faire effectuer par le bras esclave des mouvements identiques ou homothétiques de ceux qui sont effectués par le bras maître et, réciproquement de faire suivre par le bras maître, à l'identique ou de façon homothétique, tous les déplacements du bras esclave. Lorsque l'un des deux bras rencontre une résistance au cours de son déplacement, l'autre bras rencontre donc une résistance égale ou proportionnelle à la précédente. Un tel système d'asservissement à retour d'effort permet de donner à la commande du manipulateur un caractère totalement spontané et donne à l'utilisateur l'impression de tenir directement l'objet en main.

Les manipulateurs utilisés habituellement comprennent au moins six degrés de liberté, c'est-à-dire que le bras maître ainsi que le bras esclave permettent de réaliser au moins six mouvements indépendants. Chaque mouvement du bras maître et chaque mouvement correspondant du bras esclave sont réalisés au moyen d'actionneurs indépendants qui sont reliés entre eux deux à deux par des systèmes d'asservissement indépendants, la géométrie du bras maître ainsi que celle du bras esclave recombinant les différents mouvements lorsqu'un mouvement complexe est réalisé.

Les actionneurs des manipulateurs maîtres-esclaves à retour d'effort peuvent être électriques ou hydrauliques. Dans le cas le plus courant des actionneurs électriques, qui sont alors des moto-réducteurs, on s'attache à ce que le mécanisme de réduction soit réversible et ne présente que des frottements négligeables, ce qui revient à relier électriquement un actionneur maître à son correspondant esclave. Les actionneurs hydrauliques sont d'application beaucoup plus limitée et concernent le plus souvent la manipulation de charges fortement multiples de la force reçue ou exercée par l'opérateur.

Quel que soit le type d'actionneur utilisé dans les manipulateurs maîtres-esclaves à retour d'effort, on peut avoir recours à deux techniques d'asservissement différentes.

La première de ces techniques, que l'on appellera « asservissement position-position », consiste à asservir en position le bras esclave à suivre le bras maître et à asservir simultanément en position le bras maître à suivre le bras esclave. Cette technique, illustrée notamment par le document FR-A-2 275 816, présente l'avantage évident de conduire à une symétrie parfaite du système d'asservissement. Les données relatives aux vitesses de déplacement des différentes parties des bras maître et esclave, qui sont par ailleurs nécessaires à la stabilité de l'asservissement, peuvent être traitées localement au niveau des actionneurs maître ou esclave ou, au contraire, transmises entre les actionneurs maître et esclave en même temps que les données de positions des bras. Cette technique nécessite généralement la réversibilité des actionneurs car le dispositif ne comporte pas normalement de capteur d'effort.

La deuxième technique d'asservissement, que l'on appellera « asservissement position-effort » ou « effort-position », consiste à asservir le bras maître à exercer le même effort que le bras esclave pendant qu'on asservit le bras esclave à occuper la même position que le bras maître, ou inversement. Cette technique, illustrée notamment par le document FR-A-2 275 833, se caractérise évidemment par une dissymétrie du système d'asservissement. En particulier, la transmission véhicule l'information de position dans un sens et d'effort dans l'autre sens.

Les différences entre les systèmes d'asservissement utilisés sur les manipulateurs maître-esclave à retour d'effort entraînent des réactions différentes d'un système à l'autre lorsqu'un retard plus ou moins grand s'introduit dans une des lignes de transmission qui relient dans les deux sens le bras maître au bras esclave.

Ainsi, lorsqu'on introduit un retard supérieur à 100 millisecondes dans un système d'asservissement position-position, ce système présente une instabilité qu'il est possible de corriger sans diminuer de façon notable le gain statique de l'asservissement. En revanche, dès que l'on veut effectuer un déplacement, l'effet du retard se traduit par un frottement visqueux proportionnel à ce retard ainsi qu'à la vitesse de déplacement. Lorsque ce retard atteint une demi-seconde ou une seconde, le frottement visqueux est très supérieur aux efforts normaux de déplacement et pratiquement intolérable.

A l'opposé, les systèmes d'asservissement position-effort ne font pas apparaître cet effet mais présentent une instabilité qu'il est plus difficile de compenser. Ainsi, des travaux réalisés sur ce type d'asservissement ont montré qu'il fallait réduire de façon considérable les gains pour réaliser un dispositif relativement stable lorsqu'un retard de 500 à 1 000 millisecondes s'introduit dans la transmission des signaux. Dans ces conditions, le mode de commande à retour d'effort devient pratiquement sans utilité.

Si l'on observe que l'existence d'un retard dans les transmissions du système d'asservissement est relativement fréquente, on conçoit que ces inconvénients des systèmes d'asservissement connus sont particulièrement gênants et qu'il est souhaitable de les faire disparaître. Tel est notamment le cas dans les systèmes d'asservissement utilisant un échantillonnage des signaux transmis. En effet, cet échantillonnage introduit un retard égal à la durée de l'échantillonnage dans la transmission des signaux. Tel est aussi le cas lors d'une transmission des données sur une distance importante et/ou dans un milieu liquide et notamment entre un satellite et une station terrestre ou entre un véhicule sous-marin et un navire de surface. En effet, le retard intrinsèque dû au délai de transmission peut alors atteindre des valeurs comprises entre 500 et 1 000 millisecondes.

L'invention a précisément pour objet la réalisation d'un système d'asservissement à retour d'effort du type position-position permettant, lorsqu'un retard existe dans la transmission des signaux, d'assurer une restitution correcte du retour d'effort, c'est-à-dire pratiquement sans frottement visqueux.

A cet effet et conformément à l'invention, il est proposé un système d'asservissement entre un actionneur maître et un actionneur esclave, chacun de ces actionneurs transmettant à un dispositif de commande de l'autre actionneur un signal de position et/ou de vitesse avec un retard de transmission, chaque dispositif de commande comparant le signal retardé provenant de l'autre actionneur au signal provenant de l'actionneur dont il assure la commande, pour délivrer un premier signal d'effort, ce système étant caractérisé en ce que, au moins du côté de l'actionneur maître, des moyens pour retarder le signal provenant de l'actionneur maître de la somme des retards de transmission sont placés en amont du dispositif de commande, de telle sorte que ce dernier compare le signal retardé provenant de l'actionneur esclave au signal provenant de l'actionneur maître et retardé par lesdits moyens, pour délivrer le premier signal d'effort.

Un tel système d'asservissement reste un asservissement du type position-position puisque les signaux transmis sont des signaux de position et/ou de vitesse. Au niveau des signaux d'efforts commandant les actionneurs, tout se passe pourtant comme si ce système était du type position-effort, ce qui permet notamment de supprimer les frottements visqueux. En outre, par rapport aux systèmes d'asservissement position-effort, le système d'asservissement selon l'invention présente les avantages liés à la transmission de signaux de position et/ou de vitesse, parmi lesquels on peut notamment citer une plus grande simplicité des dispositifs de détection associés aux actionneurs.

Lorsque le retard devient trop important, la stabilité du système d'asservissement selon l'invention tend à décroître et, conformément à un mode de réalisation préféré de ce système, il est proposé de la rendre comparable à celle des systèmes d'asservissement position-position de la technique antérieure en prévoyant de plus, du côté de l'actionneur maître, un deuxième dispositif de commande comparant le signal retardé provenant de l'actionneur esclave au signal provenant de l'actionneur maître pour délivrer un deuxième signal d'effort, le premier dispositif de commande définissant avec l'actionneur maître la même fonction de transfert que le dispositif de commande d'asservissement esclave avec l'actionneur esclave, des moyens pour redresser le premier signal d'effort et le deuxième signal d'effort, des moyens pour comparer les signaux d'effort redressés, des moyens pour choisir le plus petit de ces signaux et des moyens pour affecter le signal ainsi choisi de la polarité du deuxième signal d'effort, avant de l'injecter dans l'actionneur maître.

Conformément à une caractéristique préférée de l'invention, ce système d'asservissement comprend de plus des moyens pour comparer la polarité du deuxième signal d'effort à celle d'un signal de vitesse de l'actionneur maître et des moyens pour choisir le deuxième signal d'effort lorsque la polarité de ces signaux est la même, quel que soit le signal délivré par les moyens pour comparer les signaux d'effort redressés. Le signal de vitesse peut, dans ce cas, soit être délivré par un capteur associé à l'actionneur maître, soit être délivré par des moyens pour dériver le signal de position de l'actionneur maître à l'intérieur du deuxième dispositif de commande de ce dernier.

Conformément à une autre caractéristique préférée de l'invention, le système d'asservissement est semblable du côté de l'actionneur esclave et du côté de l'actionneur maître.

Le système d'asservissement selon l'invention peut s'appliquer à une commande de pilotage d'un engin ou à une commande nécessitant le dosage de l'effort de tout mouvement d'une machine. Toutefois, il s'applique de préférence à un télémanipulateur, ce télémanipulateur étant caractérisé en ce qu'il comprend un système d'asservissement réalisé conformément à l'invention.

On décrira maintenant, à titre d'exemple non limitatif, différents modes de réalisation de l'invention en se référant aux dessins annexés dans lesquels :

la figure 1 représente de façon schématique un circuit d'asservissement du type position-position à retour d'effort de la technique antérieure,

la figure 2 représente la partie maître du système de la figure 1 dans laquelle ont été introduites les caractéristiques de la présente invention,

la figure 3 est une vue plus détaillée d'une partie du système d'asservissement de la figure 2,

la figure 4a représente un deuxième mode de réalisation de l'invention constituant un perfectionnement du système de la figure 2,

la figure 4b représente une variante de réalisation du système de la figure 4a,

la figure 5 représente de façon plus détaillée une partie des systèmes des figures 4a et 4b, et

la figure 6 représente de façon schématique un autre mode de réalisation de l'invention dans lequel les parties maître et esclave du système d'asservissement sont modifiées conformément à l'invention.

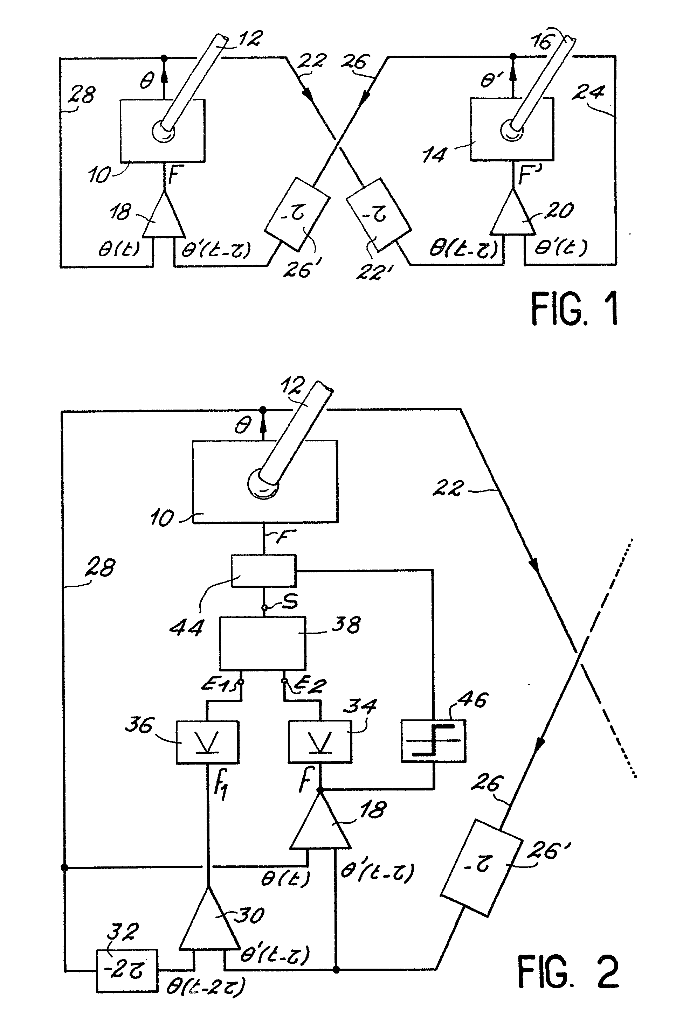

On a représenté schématiquement sur la figure 1 un système d'asservissement à retour d'effort du type position-position permettant de commander l'asservissement de l'un des mouvements du bras maître et du bras esclave d'un manipulateur conformément à la technique antérieure (voir par exemple le brevet français FR-A-2 275 816). Bien entendu un système d'asservissement comparable est prévu pour chacun des mouvements individuels du manipulateur, ces mouvements étant combinés entre eux dans le bras maître et dans le bras esclave.

De façon plus précise, le système d'asservissement de la figure 1 comprend du côté maître un actionneur maître 10 muni d'un levier mobile 12 sur lequel un effort peut être appliqué. A l'actionneur 10 correspond côté esclave un actionneur esclave 14 muni d'un levier 16 identique ou semblable au levier 12. Il est à noter que les actionneurs 10 et 14 peuvent être identiques ou homothétiques. Dans ce dernier cas, la reproduction par le levier 16 du mouvement commandé par le levier 12 sera homothétique sur le plan géométrique. Une proportionnalité peut aussi exister au niveau des efforts si la capacité de couple de l'actionneur 14 est multiple de celle de l'actionneur 10.

Le but du système d'asservissement de la figure 1 est que, lorsque l'opérateur actionne le levier 12, le levier 16 réalise le même mouvement ou un mouvement proportionnel. De plus, tout effort rencontré dans son mouvement par le levier 16 doit être restitué à la main de l'opérateur sur le levier 12 et réciproquement, si le levier 16 se trouve entraîné par une force externe au système, le levier 12 doit lui-même être entraîné avec un effort égal ou proportionnel à cette force.

A cet effet, le système d'asservissement de la figure 1 comprend un dispositif de commande d'asservissement 18 associé à l'actionneur maître 10 et un dispositif de commande d'asservissement 20 associé à l'actionneur esclave 14. Un signal ou une donnée de position θ, délivré par un capteur de position (non représenté) associé à l'actionneur maître 10, est envoyé par une ligne de transmission 22 au dispositif de commande 20 de l'actionneur esclave, et ce dispositif compare ce signal θ à un signal ou une donnée de position θ' délivré par un capteur de position (non représenté) associé à l'actionneur esclave 14. Le signal θ' parvient au dispositif 20 par une ligne 24. En fonction des résultats de cette comparaison, le dispositif 20 délivre un signal de force F' commandant l'actionneur esclave 14.

De même, le signal de position θ' revient vers le dispositif de commande 18 de la partie maître par une ligne 26 pour être comparé dans ce dispositif 18 avec le signal θ qui lui parvient par une ligne 28. En fonction des résultats de cette comparaison, le dispositif 18 délivre un signal de force F qui commande l'actionneur maître 10.

Les actionneurs 10 et 14 délivrent des efforts proportionnels. Il en résulte que les dispositifs 18 et 20 sont sensiblement identiques, leurs différences pouvant par exemple résider dans les réseaux correcteurs et, d'une façon générale, dans la différence des fonctions de transfert de ces dispositifs.

A titre d'exemple, les dispositifs de commande 18 et 20 peuvent être réalisés conformément aux enseignements du brevet français FR-A-2 275 816.

Le système d'asservissement classique qui vient d'être décrit en se référant à la figure 1 représente une symétrie totale entre les parties maître et esclave, aussi bien sur le plan mécanique qu'au niveau du système d'asservissement proprement dit. Chacun des dispositifs 18 et 20 de commande d'asservissement compare les positions θ et θ' pour délivrer une force proportionnelle au signal d'erreur correspondant. Ainsi, si les actionneurs 10 et 14 sont électriques les signaux F et F' délivrés par les dispositifs 18 et/ou 20 sont des signaux commandant le courant alors que ces signaux commandent la pression si les actionneurs 10 et/ou 14 sont hydrauliques.

Si l'on suppose que la valeur du signal θ' est inférieure à celle du signal θ, le signal F exerce sur l'actionneur 10 un effort opposé à celui de θ. A l'inverse, le signal F' délivré par le dispositif 20 exerce alors sur l'actionneur esclave 14 un effort de même sens que l'effort θ'. Les dispositifs 18 et 20 fonctionnent donc en sens opposé. En d'autres termes, le dispositif de commande d'asservissement 20 exerce un couple actif sur l'actionneur esclave 14, alors que le dispositif 18 exerce un couple résistant sur l'actionneur maître 10. Bien entendu, si la valeur de θ' est au contraire supérieure à celle de θ, le système réagit de façon identique après inversion de tous les signes des angles.

Comme le montrent les flèches sur la figure 1, le système d'asservissement qui vient d'être décrit se caractérise par la transmission d'un signal de position dans l'un et l'autre sens entre la partie maître et la partie esclave par les lignes 22 et 26. Comme on l'a mentionné précédemment, cette transmission de signaux entre les parties maître et esclave peut s'accompagner dans certains cas d'un retard ou délai de transmission τ que l'on a fait apparaître sur la figure 1 sous la forme de deux rectangles identiques repérés 22' et 26' pour les lignes 22 et 26. Pour des raisons physiques évidentes, lorsqu'un tel délai de transmission existe, il est presque toujours le même sur la ligne 22 et sur la ligne 26.

Comme on l'a mentionné précédemment, le signal de position peut être accompagné d'un signal de vitesse, ou ladite position peut être reconstituée à partir d'un unique signal de vitesse selon les enseignements du brevet français FR-A-2 275 833. De même, ce délai de transmission τ peut être dû à deux causes différentes qui peuvent éventuellement s'additionner. La première de ces causes résulte des moyens de traitement des signaux transmis par les lignes 22 et 26. Lorsqu'on procède sur ces lignes à un échantillonnage des signaux au moyen de dispositifs multiplexeurs comme on l'a décrit notamment dans la demande de brevet français FR-A-2 275 833, la transmission des signaux se fait de façon indirecte sous la forme d'échantillons de signaux représentatifs de la vitesse de déplacement au niveau de chacun des actionneurs, ces signaux étant ensuite intégrés afin de reconstituer la position correspondante de l'actionneur. Il en résulte un retard constant dans les signaux ayant pour origine la durée de la répétition au cours de l'échantillonnage.

A cette première cause de retard peut se substituer ou s'ajouter une deuxième cause due à la distance de transmission des signaux et/ou à la nature du milieu servant à cette transmission. Tel est notamment le cas lorsque les lignes 22 et 26 schématisent une transmission électromagnétique de grande distance notamment entre une station terrestre et un satellite ou lorsque ces lignes schématisent une transmission ultrasonore sous-marine notamment entre un véhicule sous-marin et un navire de surface. Dans les deux cas, le retard peut être connu de façon précise et l'on peut considérer qu'il varie entre une demi-seconde et deux secondes environ.

L'effet néfaste de ce retard sur le fonctionnement du système d'asservissement de la figure 1 est d'autant plus important qu'il faut observer qu'au niveau de chacun des dispositifs de commande d'asservissement 18 et 20, le délai de transmission aller s'ajoute au délai de transmission retour. Ainsi, à l'instant t, le dispositif 18 de la partie maître compare le signal $\theta$ (t) au signal $\theta'$ (t − $\tau$), alors qu'au même instant, le dispositif 20 de la partie esclave compare le signal $\theta$ (t − $\tau'$) au signal $\theta'$ (t). En pratique, si l'on exerce à l'instant t une action sur le levier 12 de l'actionneur maître 10, le signal $\theta$ représentatif de cette action se répercute à l'entrée du dispositif de commande d'asservissement 20 de l'actionneur esclave 14 avec le délai $\tau$ et l'effet qui en résulte sur l'actionneur esclave, représenté par le signal $\theta'$ (t − $\tau$) revient donc au dispositif de commande d'asservissement 18 de l'actionneur maître 10 dans un délai global de deux $\tau$ après l'action initiale sur le levier 12. Dans le cas où les délais aller et retour seraient différents ($\tau$ et $\tau'$), le délai global serait bien entendu $\tau + \tau'$.

On décrira maintenant en se référant à la figure 2 un premier mode de réalisation du système d'asservissement selon l'invention permettant de remédier aux inconvénients dus au retard dans les systèmes d'asservissement à retour d'effort du type position-position que l'on vient de décrire en se référant à la figure 1.

On remarquera tout d'abord qu'on n'a pas représenté sur la figure 2 la partie esclave du système d'asservissement. Cela se justifie par le fait que, dans ce premier mode de réalisation de l'invention, la partie esclave du système reste identique à celle des systèmes de la technique antérieure décrite en se référant à la figure 1. La partie maître du système d'asservissement de l'invention comprend quant à elle l'ensemble des éléments utilisés selon la technique antérieure. Ainsi, on retrouve sur la figure 2 l'actionneur maître 10, générateur de couple, et son levier 12. On a également représenté la ligne de transmission 22 par laquelle le signal de position $\theta$ sortant de l'actionneur 10 est transmis à la partie esclave du système avec le retard $\tau$. Le signal $\theta$ est également transmis par la ligne 28 au dispositif de commande d'asservissement 18, qui reçoit par ailleurs avec un retard $\tau$ représenté par le rectangle 26' le signal de position $\theta'$ provenant de l'actionneur esclave par la ligne de transmission 26. Comme dans le système de la technique antérieure, le dispositif 18 compare donc à l'instant t le signal $\theta$ (t) au signal $\theta'$ (t − $\tau$) pour délivrer un signal d'effort f.

Conformément à l'invention, un deuxième dispositif d'asservissement 30 est prévu du côté maître de l'asservissement. Ce dispositif 30 définit avec l'actionneur 10 une fonction de transfert aussi proche que possible de celle définie par le dispositif 20 combiné avec l'actionneur 14. Il peut notamment être identique au dispositif 18 ou 20. Le dispositif 30 reçoit le signal de position $\theta$ délivré par l'actionneur maître 10, après que ce signal soit passé par un circuit de retard 32 retardant ce signal de deux fois le délai de transmission $\tau$ (ou de $\tau + \tau'$). Comme le dispositif 18, le dispositif 30 reçoit d'autre part le signal $\theta'$ provenant de la partie esclave du système. Le dispositif de commande d'asservissement 30 compare donc à l'instant t le signal $\theta$ (t − 2$\tau$) au signal $\theta'$ (t − $\tau$) pour délivrer un signal d'effort $f_1$. Il résulte de ce qui précède que les signaux f et $f_1$ ont la même amplitude de variation.

Chacun des signaux d'effort f et $f_1$ passent dans un ensemble redresseur 34 et 36, respectivement, et les deux signaux redressés sont comparés dans un circuit 38 qui choisit le plus petit des deux et le délivre à la sortie.

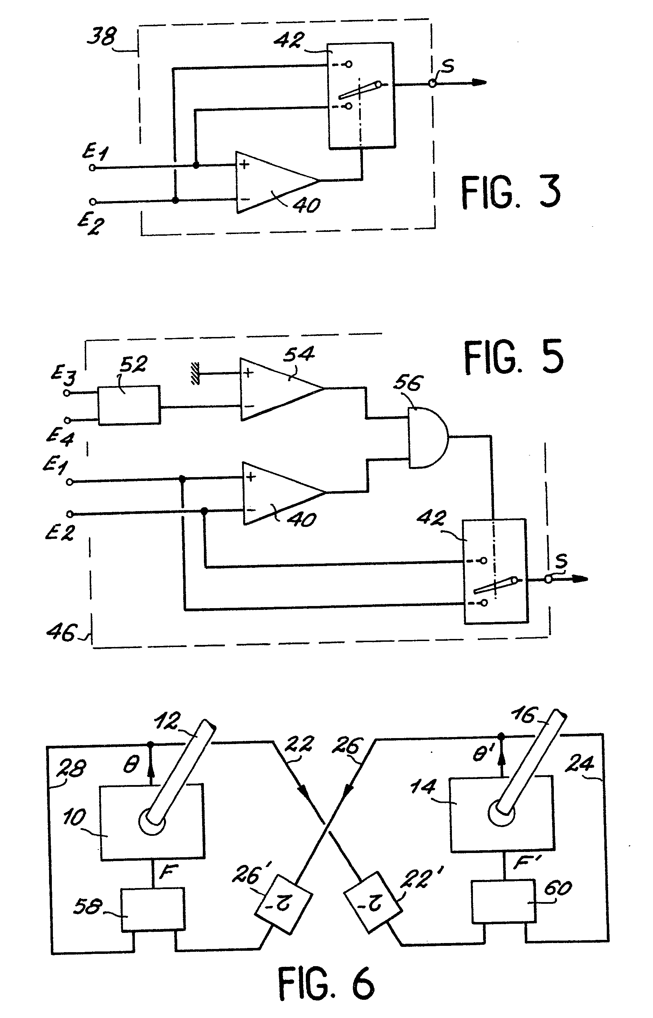

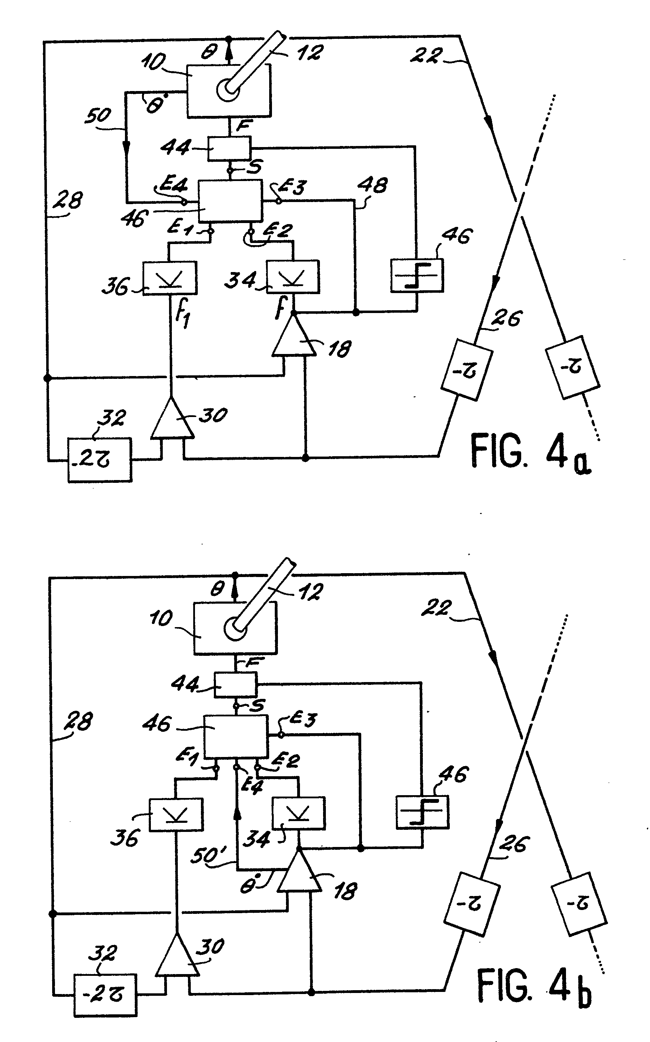

De façon plus précise, on voit sur la figure 3 que le circuit 38 comprend un amplificateur opérationnel 40 fonctionnant en comparateur et un commutateur analogique 42. Les signaux redressés injectés aux entrées $E_1$ et $E_2$ du circuit 38 sont acheminés, d'une part, aux entrées de l'amplificateur 40 et, d'autre part aux entrées du commutateur 42. Ce dernier est commandé par le signal délivré à la sortie de l'amplificateur 40. Ce signal est un signal logique, 0 ou 1, selon que la différence est positive ou négative. Ainsi, le signal transmis à la sortie S du circuit 38 est le plus petit des deux signaux injectés aux entrées $E_1$ et $E_2$.

Enfin, on voit sur la figure 2 que, le signal délivré à la sortie S du circuit 38 est affecté de la polarité du signal f par un circuit 44 commandé par un dispositif détecteur de polarité 46 branché à la sortie du dispositif de commande d'asservissement 18. C'est le signal polarisé F sortant du circuit 44 qui est alors, selon l'invention, appliqué à l'actionneur maître 10.

Le système qui vient d'être décrit peut fonctionner de trois manières différentes selon l'amplitude et la polarité des signaux f et $f_1$ délivrés par les dispositifs d'asservissement 18 et 30.

Dans un premier cas, on suppose que le signal redressé f est inférieur au signal redressé $f_1$. Le circuit 38 délivre alors à sa sortie le signal f redressé et le circuit 44 redonne à ce signal, par l'intermédiaire du dispositif 46, la polarité initiale du signal f. Le signal F commandant l'asservissement de l'actionneur maître 10 est alors identique au signal f et le fonctionnement du système est le même que celui de la figure 1.

Si l'on suppose maintenant que le signal $f_1$ redressé est inférieur au signal f redressé et que les signaux f et $f_1$ présentent la même polarité, le circuit 38 délivre à sa sortie S le signal $f_1$ redressé et le circuit 44 redonne à ce signal la polarité du signal f. Le signal F est alors identique au signal $f_1$ délivré par le deuxième dispositif d'asservissement 30.

Enfin, si l'on suppose que le signal $f_1$ redressé est inférieur au signal f redressé et que les signaux f et $f_1$ présentent une polarité inverse, tout se passe comme dans le paragraphe précédent, mais le circuit 44 affecte le signal $f_1$ de la polarité du signal f, de telle sorte que le signal F commandant l'actionneur maître 10 est le signal $f_1$ délivré par le dispositif de commande d'asservissement 30, mais dont on a inversé la polarité.

Si l'on analyse maintenant ces trois modes de fonctionnement, on a déjà indiqué à propos du système de la figure 1 que le premier mode mettant en œuvre le dispositif 18 se caractérise par un effet parasite dû au retard total $2\tau$ (ou $\tau + \tau'$). Cet effet se caractérise par une résistance présentant l'aspect d'un frottement visqueux dû au fait que le bras esclave est en retard sur le bras maître. Si les mouvements s'effectuent à vitesse constante, il en résultera un décalage constant entre le bras esclave et le bras maître. Si la vitesse augmente, la résistance parasite augmente proportionnellement. Il en est de même si l'on augmente le retard $2\tau$. En revanche, ce frottement visqueux a aussi un effet bénéfique puisqu'il participe à la stabilisation du système. Ce mode apparaît donc comme avantageux lorsque la vitesse est faible ou nulle.

Les deuxième et troisième modes de fonctionnement du système de la figure 2 mettent en œuvre le dispositif de commande d'asservissement 30. Comme on l'a vu, ce dispositif compare au temps t le signal $\theta (t - 2\tau)$ au signal $\theta' (t - \tau)$. Cette comparaison est à rapprocher de celle qui est effectuée par le dispositif de commande 20 de l'actionneur esclave 14 (figure 1) qui compare $\theta (t - \tau)$ à $\theta' (t)$. En effet, comme le dispositif 20, le dispositif 30 compare au signal de position esclave $\theta'$ un signal de position maître $\theta$ qui est en retard d'un temps $\tau$ par rapport au signal $\theta'$. En d'autres termes, on peut considérer que le dispositif 30 procède avec un retard $\tau$ à la même comparaison que le dispositif de commande d'asservissement esclave 20. Le mouvement du bras esclave n'étant généralement pas très rapide en regard du temps $\tau$, on peut considérer que le signal $f_1$ délivré par le dispositif 30 diffère très peu du signal F' délivré par le dispositif 20.

Si l'on applique ces différentes remarques au deuxième mode de fonctionnement du système de la figure 2, dans lequel le signal F injecté dans l'actionneur maître 10 est le signal $f_1$, on peut considérer qu'on a injecté dans l'actionneur maître 10 un signal correspondant au signal qu'on aurait pu prélever à l'entrée de l'actionneur esclave 14 et parvenant avec le retard de transmission $\tau$ à la partie maître du système. Dans ce mode de fonctionnement, tout se passe donc comme si on réalisait un asservissement de position de l'actionneur maître vers l'actionneur esclave et un asservissement d'effort de l'actionneur esclave vers l'actionneur maître. On a déjà mentionné que ce type d'asservissement position-effort n'est pas sensible à l'effet du retard sous forme d'un frottement visqueux, car il apporte avec retard une valeur vraie de l'effort appliqué par l'actionneur esclave 14. En revanche, on sait que ce type d'asservissement est plus instable que les asservissements position-position. Il est toutefois plus performant que le précédent lorsque la vitesse augmente ou lorsque le retard est faible.

Le troisième mode de fonctionnement du système de la figure 2 qui consiste à appliquer à l'actionneur maître 10 un signal F correspondant au signal d'effort $f_1$ délivré par le dispositif 30, mais affecté d'une polarité inversée, constitue en fait une simple variante du deuxième mode. En effet, ce troisième mode présente lui aussi toutes les caractéristiques d'un asservissement position-effort. Il a été prévu par suite de la nécessité d'assurer au mieux la continuité dans le fonctionnement du système. En effet, si seuls les deux modes de fonctionnement précédents existaient, la commutation d'un mode sur l'autre pourrait conduire à une inversion brutale du sens du signal F commandant l'actionneur maître 10 lorsque la polarité des signaux f et $f_1$ est inverse. Une telle inversion n'est évidemment pas souhaitable et c'est la raison pour laquelle on affecte dans ce troisième mode de fonctionnement le signal $f_1$ de la polarité inverse lorsque les polarités des signaux $f_1$ et f sont opposés.

Grâce à ces trois modes de fonctionnement, le système d'asservissement de la figure 2 permet de tirer profit des avantages respectifs des asservissements position-position et position-effort, tout en assurant la continuité du fonctionnement du système. Ainsi, lorsque la vitesse des déplacements des bras du manipulateur est faible ou nulle, l'asservissement position-position présente une meilleure stabilité et les frottements visqueux sont négligeables puisqu'ils sont proportionnels à la vitesse. Le signal f, qui est dans ces conditions inférieur au signal $f_1$, est alors injecté dans l'actionneur maître 10 conformément au premier mode de fonctionnement décrit. Lorsque la vitesse augmente, c'est au contraire l'asservissement position-effort qui est le plus performant. Le signal $f_1$ redressé devient alors supérieur au signal f redressé et il est injecté avec la polarité de ce dernier dans l'actionneur maître 10, conformément au deuxième et au troisième modes de fonctionnement exposés précédemment. Il est à noter que l'affectation systématique du signe du signal f au signal $f_1$ contribue à la stabilité du système d'asservissement puisqu'elle fait bénéficier au signal $f_1$ de la stabilité associée au signal f.

Dans le cas où le retard $2\tau$ (ou $\tau + \tau$) est faible (de l'ordre de 10 ms), ce qui est notamment le cas lorsqu'on effectue un échantillonnage des signaux, le circuit de la figure 2 peut être simplifié toujours conformément à l'invention. A cet effet, seuls le dispositif 30 et le circuit de retard 32 sont conservés du côté maître de l'asservissement, le dispositif 18 et les circuits 34, 36, 38, 44 et 46 étant par ailleurs supprimés. Le système fonctionne alors en continu selon le deuxième mode décrit précédemment, ce qui permet de supprimer les frottements visqueux qui diminuent la vitesse maximale possible dans les systèmes position-position de la technique antérieure.

Le système qui vient d'être décrit en se référant à la figure 2 présente une bonne stabilité et des gains d'asservissement convenables. De plus, il restitue avec le retard $2\tau$ à l'opérateur un retour de l'effort appliqué par l'actionneur esclave 14 au niveau du levier 12 de l'actionneur maître 10. Compte tenu du retard au niveau du retour d'effort, le comportement du système contre un obstacle fixe est satisfaisant. Il en est de même lorsqu'on effectue un déplacement allant à l'opposé d'un effort, comme c'est le cas notamment lorsqu'on soulève une charge contre la pesanteur. En revanche, le comportement de ce système est moins satisfaisant lorsqu'on effectue un déplacement allant dans le même sens que l'effort, comme c'est le cas notamment lorsqu'il faut freiner une charge au cours de sa chute au lieu de la soulever. Tout se passe alors comme si on faisait travailler le manipulateur à l'inverse, c'est-à-dire si l'on actionnait le bras esclave pour faire se mouvoir le bras maître.

Afin de remédier à cet inconvénient, on a représenté sur la figure 4a un deuxième mode de réalisation du système d'asservissement selon l'invention. Ce mode de réalisation consiste à mettre en pratique l'observation selon laquelle, dans le cas où l'opérateur freine la charge au lieu de la soulever, le premier mode de fonctionnement du dispositif selon l'invention est toujours préférable, car son défaut de présenter un frottement visqueux est cette fois favorable au freinage de la charge.

Le système de la figure 4a comporte donc tous les éléments du système de la figure 2 à l'exception du circuit 38 qui est remplacé par un circuit 46 représenté plus en détail sur la figure 5. Les autres éléments du système sont désignés par les mêmes numéros de référence et ne seront pas décrits ici à nouveau.

Comme le montre la figure 5, le circuit 46 comprend tout d'abord les mêmes éléments que le circuit 38 du mode de réalisation de la figure 2. Ainsi, on voit que les entrées $E_1$ et $E_2$ du circuit 46 sont raccordées à un amplificateur opérationnel 40 fonctionnant en comparateur. De même, ces entrées sont raccordées à un commutateur analogique 42 qui transmet à la sortie S l'un ou l'autre des signaux $f_1$ et f, après que ces signaux aient été redressés dans les dispositifs redresseurs 36 et 34.

De plus, le circuit 46 comprend deux entrées supplémentaires $E_3$ et $E_4$ qui reçoivent respectivement le signal f délivré par le dispositif de commande d'asservissement 18 et un signal $\dot{\theta}$ représentant la vitesse de déplacement de l'actionneur 10. Le signal f est prélevé à la sortie du dispositif 18 et acheminé jusqu'à l'entrée $E_3$ par une ligne 48. Dans le mode de réalisation de la figure 4a, l'actionneur 10 comporte un capteur tachymétrique (non représenté) permettant de mesurer la vitesse $\dot{\theta}$ et celle-ci est acheminée ensuite jusqu'à l'entrée $E_4$ du circuit 46 par une ligne 50. Si l'on se réfère à nouveau à la figure 5, on voit que les signaux f et $\dot{\theta}$ injectés respectivement aux entrées $E_3$ et $E_4$ du circuit 46 sont introduits dans un circuit multiplicateur 52 dont la sortie est raccordée à l'une des bornes d'entrée d'un second amplificateur opérationnel 54 fonctionnant en comparateur de phases. La deuxième entrée de l'amplificateur 54 est raccordée à la terre, de telle sorte que l'amplificateur 54 délivre un signal logique 0 lorsque les signaux f et $\dot{\theta}$ présentent la même polarité. Les signaux délivrés par les amplificateurs 54 et 40 sont injectés dans un circuit ET 56 dont la sortie commande le commutateur 42.

Dans le circuit 46 qui vient d'être décrit, dès que les signaux $\dot{\theta}$ et f sont de même signe, le commutateur 42 est commandé de façon à raccorder l'entrée $E_2$ à la sortie S. En d'autres termes, c'est alors le signal f redressé délivré par le dispositif 18 qui va parvenir au circuit 44, quel que soit le résultat de la comparaison effectuée par l'amplificateur opérationnel 40 entre les signaux f et $f_1$. Dans ce mode de réalisation de la figure 4a, le circuit 46 permet donc d'injecter systématiquement dans l'actionneur maître 10 le signal f délivré par le dispositif 18 lorsque l'effort représenté par le signal f est de même sens que la vitesse du déplacement représentée par le signal $\theta$. En revanche, lorsque les signaux f et $\dot{\theta}$ sont de signes opposés, l'amplificateur opérationnel 54 délivre alors un signal logique 0 et le circuit 46 fonctionne de la même manière que le circuit 38 dans le mode de réalisation de la figure 2.

Sur la figure 4b, on a représenté une variante du mode de réalisation de la figure 4a dans laquelle, au lieu d'adjoindre à l'actionneur 10 un capteur tachimétrique afin de connaître la vitesse $\dot{\theta}$, on calcule cette vitesse à l'intérieur du dispositif de commande d'asservissement 18, en dérivant le signal θ. La ligne 50 de la figure 4a reliant l'actionneur 10 à l'entrée $E_4$ du circuit 46 est alors remplacée par une ligne 50' reliant le dispositif 18 à l'entrée $E_4$ du circuit 46.

Le mode de réalisation qui vient d'être décrit en se référant à la figure 4a ainsi que la variante de la figure 4b permettent, comme on l'a vu, de ramener automatiquement le fonctionnement du système d'asservissement selon l'invention dans le premier mode de fonctionnement qui correspond au fonctionnement des systèmes d'asservissement de la technique antérieure telle que représentée sur la figure 1, lorsque le bras esclave tend en fait à entraîner le bras maître dans son mouvement. Il est ainsi possible de supprimer les inconvénients présentés par le système d'asservissement selon l'invention lorsque celui-ci fonctionne à l'inverse, c'est-à-dire lorsque l'opérateur freine la charge au lieu de l'actionner.

Au-delà des perfectionnements décrits en se référant aux figures 4a et 4b, ces quelques remarques font apparaître qu'on peut encore améliorer le fonctionnement du système d'asservissement selon l'invention en munissant le côté esclave du système des mêmes perfectionnements que le côté maître. Ce mode de réalisation a été représenté de façon schématique sur la figure 6 sur laquelle on voit que l'actionneur maître 10, muni de son levier 12 ainsi que l'actionneur esclave 14, muni de son levier 16 sont commandés tous deux par un dispositif d'asservissement 58, 60 réalisé conformément au mode de réalisation de la figure 2 ou au mode de réalisation de la figure 4a ou 4b. Comme dans le mode de réalisation de la figure 1, le dispositif de commande d'asservissement esclave 60 reçoit le signal de position θ au travers d'une ligne 22 définissant un retard τ représenté par le rectangle 22' et le signal de position θ' au travers d'une ligne 24. De façon symétrique, le dispositif de commande d'asservissement maître 58 reçoit le signal θ' par la ligne de transmission 26 définissant un retard τ représenté par le rectangle 26', ainsi que le signal θ par la ligne 28. Chacun des dispositifs 58 et 60 selon l'invention délivre en réponse à ces signaux un signal optimal de commande de couple F, F' respectivement, commandant les actionneurs maître 10 et esclave 14. Les actionneurs 10 et 14 pouvant être comme on l'a vu précédemment identiques ou homothétiques, les ensembles d'asservissement 58 et 60 du mode de réalisation de la figure 6 seront identiques ou semblables selon le cas.

Dans le mode de réalisation de la figure 6, lorsque le bras esclave exerce un effort actif, c'est-à-dire lorsqu'il entraîne la charge, le bras esclave exerce vis-à-vis de l'opérateur un effort de freinage permettant de bénéficier du fonctionnement perfectionné du système d'asservissement décrit en se référant à la figure 2. En effet, le bras esclave se trouve alors en situation de travail actif, de telle sorte que le mode de fonctionnement de l'ensemble d'asservissement 60 est le premier mode correspondant à la technique antérieure, alors que, du côté du bras maître, le fonctionnement est optimisé par l'ensemble d'asservissement 58, conformément à l'invention. Lorsqu'au contraire la charge entraîne le bras esclave, l'ensemble d'asservissement esclave 60 fonctionne conformément à l'invention alors qu'à l'inverse, l'ensemble d'asservissement maître 58 commute sur le premier mode de fonctionnement correspondant au fonctionnement selon la technique antérieure. Ainsi, quelle que soit la situation envisagée, le système d'asservissement de la figure 6 fonctionne dans les deux sens selon la configuration la meilleure permise par l'invention, notamment lorsque les ensembles d'asservissement 58 et 60 sont réalisés conformément au mode de réalisation des figures 4a et 4b.

Bien entendu, l'invention n'est pas limitée aux modes de réalisation qui viennent d'être décrits à titre d'exemple, mais en couvre toutes les variantes. Ainsi, il faut rappeler qu'un télémanipulateur définit généralement au moins six degrés de liberté correspondant à six mouvements différents qui sont commandés chacun, du côté maître comme du côté esclave, par un actionneur différent. En conséquence, un télémanipulateur comprendra généralement au moins six systèmes d'asservissement conformément à l'invention, chacun des systèmes étant associé à un couple d'actionneurs maître et esclave correspondant à un mouvement donné. De plus, le système d'asservissement selon l'invention peut aussi s'appliquer à d'autres commandes et notamment à la commande du pilotage d'un engin ou à toute commande nécessitant le dosage de l'effort commandant un mouvement d'une machine.

## Revendications

1. Système d'asservissement entre un actionneur maître (10) et un actionneur esclave (14), chacun de ces actionneurs transmettant à un dispositif de commande (30, 20) de l'autre actionneur un signal de position et/ou de vitesse (θ, θ') avec un retard de transmission (τ, τ'), chaque dispositif de commande comparant le signal retardé provenant de l'autre actionneur au signal provenant de l'actionneur dont il assure la commande, pour délivrer un premier signal d'effort (f₁, F'), ce système étant caractérisé en ce que, au moins du côté de l'actionneur maître (10), des moyens (32), pour retarder le signal (θ) provenant de l'actionneur maître de la somme des retards de transmission (2τ, τ + τ'), sont placés en amont du dispositif de commande (30), de telle sorte que ce dernier compare le signal (θ) retardé provenant de l'actionneur esclave (14) au signal (θ) provenant de l'actionneur maître et retardé par lesdits moyens, pour délivrer le premier signal d'effort (f₁).

2. Système d'asservissement selon la revendication 1, caractérisé en ce qu'il comprend, de plus, du côté de l'actionneur maître, un deuxième dispositif de commande (18) comparant le signal (θ') retardé provenant de l'actionneur esclave au signal (θ) provenant de l'actionneur maître, pour délivrer un deuxième signal d'effort (f), le premier dispositif de commande (30) définissant avec l'actionneur maître (10) la même fonction de transfert que le dispositif de commande d'asservissement esclave (20) avec l'actionneur esclave (14), des moyens (34, 36) pour redresser le premier signal d'effort (f) et le deuxième signal d'effort (f₁), des moyens (40) pour comparer les signaux d'effort redressés, des moyens (42) pour choisir le plus petit de ces signaux et des moyens (44, 46) pour affecter le signal ainsi choisi de la polarité du deuxième signal d'effort (f), avant de l'injecter dans l'actionneur maître (10).

3. Système d'asservissement selon l'une quelconque des revendications 1 et 2, caractérisé en ce qu'il comprend de plus des moyens (54) pour comparer la polarité du deuxième signal d'effort (f) à celle d'un signal de vitesse (θ̇) de l'actionneur maître (10) et des moyens (56) pour choisir le deuxième signal d'effort lorsque la polarité de ces signaux est la même, quel que soit le signal délivré par les moyens (40) pour comparer les signaux d'effort redressés.

4. Système d'asservissement selon la revendication 2, caractérisé en ce que le signal de vitesse (θ̇) est délivré par un capteur associé à l'actionneur maître (10).

5. Système d'asservissement selon la revendication 2, caractérisé en ce que le signal de vitesse (θ̇) est délivré par des moyens pour dériver le signal de position (θ) de l'actionneur maître à l'intérieur du deuxième dispositif de commande (18) de ce dernier.

6. Système d'asservissement selon l'une quelconque des revendications 1 à 5, caractérisé en ce qu'il est semblable du côté de l'actionneur esclave (14) et du côté de l'actionneur maître (10).

7. Télémanipulateur comprenant un bras maître et un bras esclave définissant chacun au moins six degrés de liberté, chacun des mouvements correspondant à l'un de ces degrés de liberté étant commandé par un actionneur maître (10) pour le bras maître et par un actionneur esclave (14) pour le bras esclave, un système d'asservissement étant prévu entre chaque actionneur maître et l'actionneur esclave correspondant, caractérisé en ce que ce système d'asservissement est réalisé conformément à l'une quelconque des revendications 1 à 6.

**Claims**

1. Position control system between a master actuator (10) and a slave actuator (14), each of said actuators transmitting to a control system (30, 20) of the other actuator a position and/or speed signal (θ, θ') with a transmission delay (τ, τ'), each control system comparing the delayed signal from the other actuator with the signal from the actuator which it controls, to deliver a first force signal ($f_1$, F'), said system being characterized in that, at least for the master actuator (10) the means (32) for delaying the signal (θ) from the master actuator by the sum of transmission delay (2τ, τ + τ'), are located upstream of the control system (30), whereby the latter compares the delayed signal (θ<sub>f</sub> from the slave actuator (14) with the signal (θ) from the master actuator delayed by said means, to provide the first force signal ($f_1$).

2. Control system according to Claim 1, characterized in that it additionally comprises, for the master actuator, a second control system (18) comparing the delayed signal (θ') from the slave actuator with the signal (θ) from the master actuator, to deliver a second force signal (f), the first control system (30) defining with the master actuator (10) the same transfer function as the slave control system (20) serves for the slave actuator (14), means (34, 36) for rectifying the first force signal (f) and the second force signal ($f_1$), means (40) for comparing the rectified force signals, means (42) for selecting the smaller of said signals, and means (44, 46) for allocating to the signal thereby chosen the polarity of the second force signal (f) before transmitting it to the master actuator (10).

3. Control system according to either of claims 1 and 2, characterized in that it additionally comprises means (54) for comparing the plurality of the second force signal (f) with that of a speed signal (θ̇) of the master actuator (10), and means (56) for selecting the second force signal when the plurality of said signals is identical, whatever the signal delivered by the means (40) for comparing the rectified force signals.

4. Control system according to claim 2, characterized in that the speed signal (θ̇) is delivered by censor associated with the master actuator (10).

5. Control system according to claim 2, characterized in that the speed signal (θ̇) is delivered by means for delivering the position signal (θ) of the master actuator to the second control system (18) of the latter.

6. Control system according to any one of claims 1 to 5, characterized in that the system for the slave actuator (14) and the master actuator (10) are the same.

7. Remote manipulator comprising a master arm and a slave arm, each having at least 6 degrees of freedom, each movement corresponding to one of these degrees of freedom being controlled by a master actuator (10) for the master arm, and by a slave actuator (14) for the slave arm, a control system being provided between each master actuator and the corresponding slave actuator, characterized in that the control system is formed according to any one of claims 1 to 6.

**Patentansprüche**

1. Einstellsystem zwischen einem Hauptbetätigungsglied (10) und einem Folgebetätigungsglied (14), wobei jedes der Betätigungsglieder an eine Steuereinrichtung (30, 20) des anderen Betätigungsgliedes ein Positions- und/oder Geschwindigkeitssignal (θ, θ') mit einer Übertragungsverzögerung (τ, τ') überträgt, jede Steuereinrichtung das von dem anderen Betätigungsglied stammende verzögerte Signal mit dem Signal vergleicht, das von dem Betätigungsglied stammt, dessen Steuerung es sicherstellt, um ein erstes Belastungssignal ($f_1$, F') zu liefern, dadurch gekennzeichnet, daß wenigstens auf seiten des Hauptbetätigungsgliedes (10) Einrichtungen (32) zum Verzögern des Signals (θ), das vom Hauptverzögerungsglied stammt, um die Summe

der Übertragungsverzögerungen (2τ, τ + τ') vor der Steuereinrichtung (30) so angeordnet sind, daß letztere das von dem Folgebetätigungsglied (14) stammende verzögerte Signal (θ) mit dem Signal (θ) vergleicht, das vom Hauptbetätigungsglied stammt und durch die genannten Einrichtungen verzögert ist, um das erste Beanspruchungssignal ($f_1$) zu liefern.

2. Einstellsystem nach Anspruch 1, dadurch gekennzeichnet, daß es darüber hinaus auf seiten des Hauptbetätigungsgliedes eine zweite Steuereinrichtung (18) enthält, die das vom Folgebetätigungsglied stammende verzögerte Signal (θ') mit dem Signal (θ) vergleicht, das vom Hauptbetätigungsglied stammt, um ein zweites Beanspruchungssignal (f) zu liefern, wobei die erste Steuereinrichtung (30) mit dem Hauptbetätigungsglied (10) dieselbe Übertragungsfunktion definiert, wie die Einstellsteuereinrichtung (20) mit dem Folgebetätigungsglied (14), weiterhin Einrichtungen (34, 36) zum Gleichrichten des ersten Beanspruchungssignals (f) und des zweiten Beanspruchungssignals ($f_1$), Einrichtungen (40) zum Vergleichen der gleichgerichteten Beanspruchungssignale, Einrichtungen (42) zum Auswählen des kleinsten dieser Signale und Einrichtungen (44, 46) zum Zuordnen des so gewählten Signals der Polarität des zweiten Beanspruchungssignals (f) vor dem Eingeben in das Hauptbetätigungsglied (10) vorgesehen sind.

3. Einstellsystem nach einem der Ansprüche 1 und 2, dadurch gekennzeichnet, daß es weiterhin Einrichtungen (54) zum Vergleichen der Polarität des zweiten Beanspruchungssignals (f) mit derjenigen eines Geschwindigkeitssignals ($\dot{\theta}$) des Hauptbetätigungsgliedes (10) und Einrichtungen (56) zum Auswählen des zweiten Beanspruchungssignals, wenn die Polarität dieser Signale gleich ist, welches auch das von den Einrichtungen (40) zum Vergleichen der gleichgerichteten Beanspruchungssignale gelieferte Signal immer ist, aufweist.

4. Einstellsystem nach Anspruch 2, dadurch gekennzeichnet, daß das Geschwindigkeitssignal ($\dot{\theta}$) von einem Aufnehmer geliefert wird, der dem Hauptbetätigungsglied (10) zugeordnet ist.

5. Einstellsystem nach Anspruch 2, dadurch gekennzeichnet, daß das Geschwindigkeitssignal ($\dot{\theta}$) von Einrichtungen zum Ableiten des Positionssignals (θ) des Hauptbetätigungsgliedes innerhalb der zweiten Steuereinrichtung (18) des letzteren geliefert wird.

6. Einstellsystem nach einem der Ansprüche 1 bis 5, dadurch gekennzeichnet, daß es auf seiten des Folgebetätigungsliedes (14) und des Hauptbetätigungsgliedes (10) ähnlich ist.

7. Fernbedienungsgerät mit einem Hauptarm und einem Folgearm, die jeweils wenigstens sechs Freiheitsgrade aufweisen, wobei jede der Bewegungen in einem dieser Freiheitsgrade von einem Hauptbetätigungsglied (10) für den Hauptarm und durch ein Folgebetätigungsglied (14) für den Folgearm gesteuert wird, wobei ein Einstellsystem zwischen jedem Hauptbetätigungsglied und dem entsprechenden Folgebetätigungsglied vorhanden ist, dadurch gekennzeichnet, daß das Einstellsystem gemäß einem der Ansprüche 1 bis 6 ausgebildet ist.

FIG. 1

FIG. 2

0 077 224

FIG. 3

FIG. 5

FIG. 6

2

FIG. 4a

FIG. 4b

3